# EUROPEAN PATENT APPLICATION

(11) **EP 2 116 292 A1**
(43) Date of publication of application: **11.11.2009**
(21) Application number: 07720530.0
(22) Date of filing: 26.03.2007
(51) Int. Cl.: B01D 53/74, F01N 3/05, F01N 3/08, F23G 7/06, B60K 13/04

(54) **A MICRO-EFFLUENT DEVICE FOR EXHAUST GAS TREATMENT**

(30) Priority: 12.01.2007 CN 200710026269
(71) Applicant: Zhang, Yuguang, Gangzhou Guangdong 510610 (CN)
(72) Inventor: Zhang, Yuguang, Gangzhou Guangdong 510610 (CN)
(74) Representative: Vandeberg, Marie-Paule L.G.
(86) International application number: PCT/CN2007/000956
(87) International publication number: WO 2008/083529

(57) **Abstract**

This Invention relates to a kind of devices with trace emission resulted for treatment of exhaust gas. The Device comprises a vessel having only one opening that serves as inlet.

An exchange section of at least two stages in sequence is provided inside the vessel after inlet of exhaust gas, between two stages there is a gas chamber at their connection part.

The gas exchange chamber at first stage of the exchange section has a through opening leading to outside atmosphere area. With this configuration, on entering into the exchange section, exhaust gas will be ejected inwards and causes very strong entrainment, which makes the gas chamber become vacuum and sucks air with oxygen from atmosphere into gas chamber via the through opening to atmosphere. Formed high-pressure gas is burned furiously with combustible gas in the gas chamber at next stage, and the remaining exhaust gas is transferred into next exchange stage with very high-speed revolution occurring on exhaust gas and momentum transfer. The Higher negative pressure is, the more gas is consumed. In this way, the exhaust gas will be treated and only trace emission, even no emission, will be resulted.

## Description

### Technical Field

This Invention relates to devices for controlling pollution of exhaust gas, especially a kind of devices with trace emission for treatment of exhaust gas.

### Background Arts

There are many existing arts for controlling pollution of exhaust gas, for example, treatment of tail gas for motor vehicles and etc. Some techniques are based on combination of fuel and batteries to reduce emission and pollution, but techniques for disposal of used batteries are not in mature state and secondary pollution may be resulted. Some techniques is based on electrical ejection in conjunction with ternary catalytic clarifier, this is the important means that China Government is promoting energetically for controlling tail gas of motor vehicles. This ternary catalytic clarifier is actually an external clarifier, which contains three metal elements, i.e. Platinum, Rhodium and Palladium, in an alveolate structure of absorption. When temperature of engine of motor vehicles during its operation in high speed reaches to 700-800 °C, chemical reaction will occur on these three elements and they effectively absorb and clarify tail gas of automobiles, therefore reduce content of CO, HC and NOX in the tail gas and make it comply with relevant national standards on emission. Since the ternary catalytic clarifier is an external clarifier only, control of air/fuel ratio ( 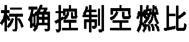 ) and situation of fuel pulverization in engines will have great influence on its normal operation. In case any failure such as damaged oxygen sensor, control switch and/or air adding valve appears in electrical ejection device, its ternary catalytic clarifier will soon become failed and cannot perform its intended function. In addition, alveolate structure of the ternary catalytic clarifier is easy to be clogged and saturated, and as result, loses its clarification ability. This will result in need of frequent replacement of clarifier and the operation cost will be increased (Generally, its normal operation period is limited within 90 days). The ternary catalytic clarifier can play its role to reduce pollution from tail gas of motor vehicles only, it cannot eliminate the tail gas.

Aim of this Invention is to provide a kind of devices with trace emission for treatment of exhaust gas that may reduce emission of exhaust gas significantly.

For realization of above aim, this Invention provides a device with trace emission for treatment of exhaust gas, which is a vessel with openings only as inlet. An exchange section consisting at least of two stages is provided inside the vessel after inlet of exhaust gas, each of these stages is provided with a jet hole at least and its corresponding diffusion hole, and a gas exchange chamber is provided between jet hole and diffusion hole, connecting to both of them, a through opening to outside atmosphere area is provided at exchange chamber of the first stage of exchange section, a gas mixture chambers is provided at each connection part between two sequential stages of exchange section. An exhaust pipe is connected to gas mixture chamber of the last stage of exchange section.

One improved design for this Invention is as follows: the said device with trace emission for treatment of exhaust gas has pipes of negative pressure, which is connected each other and located between exchange gas chambers of stages from third to last one of exchange section or between their exchange gas chamber and corresponding gas mixture chamber.

Another improved design for this Invention is as follows: the said device with trace emission for treatment of exhaust gas is provided with holes of laminar flow instead of jet holes in exchange section.

With this configuration, the Device receives through its inlet exhaust gas with certain pressure, which would enter into exchange section and jet inwards. This jet gas causes very strong entrainment effect and makes gas chamber become vacuum and air with oxygen being sucked into the chamber from atmosphere via the through opening to outside atmosphere. Combustible gas in this mixed gas with high pressure is burned furiously in the next gas chamber and combustible and harmful substance is decomposed in burning. The left exhaust gas is transferred into next stage of the exchange section. On entering next stage of exchange section, exhaust gas revolves with high speed because of negative pressure in the gas chamber and under the feedback effect of holes of negative pressure, negative energy produced by the negative pressure and working energy of the exhaust gas are balanced out each other and very strong rolling is resulted in.( 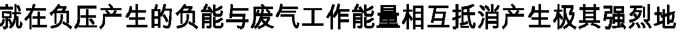 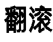 ) This causes heavy collisions and momentum transfer, i.e. "black hole" of gas. The higher the negative pressure is, the more exhaust gas is consumed, and trace amount of remaining not-consumed gas will be emitted via exhaust pipe. In this way, pollution of exhaust gas will be reduced significantly. The higher negative pressure is, the more gas is consumed. In this way, the exhaust gas will be treated and only trace emission, even no emission, will be resulted.

### Description of Drawings

Fig. 1 is structural diagram of one embodiment of this Invention.
Fig. 2 is structural diagram of jet hole in this Invention.
Fig.3 is structural diagram of holes of laminar flow in this Invention.
Fig. 4 is sectional view along line A-A in Fig. 1.
Fig. 5 is sectional view along line B-B in Fig. 1.

### Embodiments

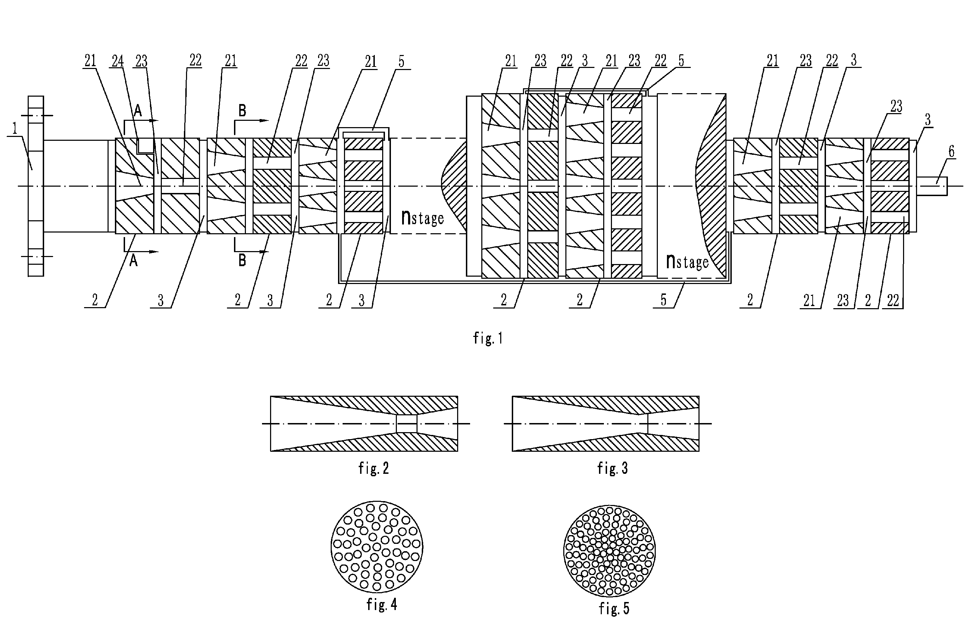

A kind of devices with trace emission resulted for treatment of exhaust gas is shown in Fig.1∼5. It is a vessel with openings only as inlet. An exchange section 2, consisting at least of thirteen stages in sequence, is provided inside the vessel after Inlet 1 of exhaust gas. Each stage of Exchange Section 2 is provided with at least one Jet Holes 21 and its corresponding Diffusion Holes 22, and a Gas Exchange Chamber 23 is provided between Jet Hole 21 and Diffusion Hole 22, connecting to both of them. A Through Opening 24 leading to outside atmosphere area is provided at Gas Exchange Chambers 23 of the first stage of Exchange Section 2. A Gas Mixture Chamber 3 is provided at each connection part between two sequential stages of Exchange Section 2, connecting to the two stages. An Exhaust Pipe 6 is connected to Gas Mixture Chamber 3 of last stage of the Exhaust Section 2. A Pipe 5 of Negative Pressure is provided between Gas Exchange Chamber 23 of third stage and Gas Mixture Chamber 3 of the eleventh stage in Exchange Section 2, connecting them. A Pipe 5 of Negative Pressure is provided between Gas Exchange Chambers 23 of eighth stage and Gas Mixture Chamber 3 of the ninth stage in Exchange Section 2, connecting them. A Pipe 5 of Negative Pressure is provided for each from the third to seventh stage of Exchange Section 2 to connect Gas Exchange Chambers 23 and its corresponding Mixture Gas Chamber 3. Jet Holes 21 of second stage of Exchange Section 2 may be replaced with holes of laminar flow.

In extent of protection based on Claims, it is allowed to have a mode in parallel connection of a number of units for the first stage of Exchange Section 2, and Nth stage of Exchange Section 2 may join up at Gas Mixture Chamber 3 and/or it is allowed to by-pass at Gas Mixture Chamber 3. There are many variant forms that may realize the aim to consume exhaust gas with trace emission.

Prototype of this Invention has been produced and only trace emission of exhaust gas is found out in testing of this prototype.

## Claims

1. A kind of devices with trace emission resulted for treatment of exhaust gas, comprising a vessel having openings only as inlet, **characterized by** an Exchange Section (2) inside the vessel after Inlet (1) of exhaust gas, consisting at least of two stages, each of which is provided with a jet hole (21) at least and its corresponding diffusion hole (22), and gas exchange chambers (23) being between jet hole (21) and diffusion hole (22) and connecting to them, a through opening (24) leading to outside atmosphere area provided at exchange chambers (23) of the first stage of exchange section (2), a gas mixture chamber (3) provided at each connection part between two sequential stages of exchange section (2), an exhaust pipe (6) provided at gas mixture chamber (3) of last stage of the exhaust section (2).

2. Devices with trace emission resulted for treatment of exhaust gas in Claim 1, wherein pipes (5) of negative pressure, connected each other, are provided between exchange gas chambers (23) of stages from third to last one of exchange section (2) or between their exchange gas chamber (23) and mixture gas chamber (3).

3. Devices with trace emission resulted for treatment of exhaust gas in Claim 1∼2, wherein holes of laminar flow may be used instead of jet holes (21) in exchange section (2).
